# EUROPEAN PATENT SPECIFICATION

(11) **EP 4 437 672 B1**
(45) Date of publication and mention of the grant of the patent: **04.11.2026**
(21) Application number: 22836355.2
(22) Date of filing: 31.10.2022
(51) Int. Cl.: H04L 1/00, H04L 65/70, H04L 69/22, H04L 69/322

(54) **PACKET FRAMING FOR APPLICATION DATA UNIT TRANSMISSION**
PAKETRAHMEN FÜR DIE ÜBERTRAGUNG VON ANWENDUNGSDATENEINHEITEN
TRAMAGE DE PAQUETS POUR TRANSMISSION D'UNITÉ DE DONNÉES D'APPLICATION

(30) Priority: 24.11.2021 US 202163282929 P
(43) Date of publication of application: 02.10.2024
(73) Proprietor: Apple Inc., Cupertino CA 95014 (US)
(72) Inventor: ROSSBACH, Ralf, Cupertino, California 95014 (US); SIROTKIN, Alexander, Cupertino, California 95014 (US); XU, Fangli, Cupertino, California 95014 (US); HU, Haijing, Cupertino, California 95014 (US); LIANG, Huarui, Cupertino, California 95014 (US); PALLE VENKATA, Naveen Kumar R., Cupertino, California 95014 (US); NUGGEHALLI, Pavan, Cupertino, California 95014 (US); VANGALA, Sarma V., Cupertino, California 95014 (US); GURUMOORTHY, Sethuraman, Cupertino, California 95014 (US); MANITHARA VAMANAN, Sudeep, Cupertino, California 95014 (US); CHEN, Yuqin, Cupertino, California 95014 (US); WU, Zhibin, Cupertino, California 95014 (US)
(74) Representative: Zacco Denmark A/S
(86) International application number: PCT/US2022/048443
(87) International publication number: WO 2023/096724

(56) References cited:
- WO-A1-2018/202205
- US-A1- 2009 296 624
- US-A1- 2017 078 917
- FINLAYSON LIVE COM R: "A More Loss-Tolerant RTP Payload Format for MP3 Audio; rfc3119.txt", A MORE LOSS-TOLERANT RTP PAYLOAD FORMAT FOR MP3 AUDIO; RFC3119.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 2001 (2001-06-01), XP015008900

## Description

### CROSS-REFERENCES TO RELATED APPLICATIONS

The present application claims priority from U.S. Provisional Application No. 63/282,929, entitled "Packet Framing for Application Data Unit Transmission" filed November 24, 2021.

### BACKGROUND

Third Generation Partnership Project (3GPP) Technical Specifications (TSs) define standards for New Radio (NR) wireless networks. One area of study for developing these TSs is providing support for low latency communication and extended reality (XR) applications. US 2009/296624 A1 relates to methods and apparatuses for transmitting and receiving broadcasts . Finlayson Live Com R: "A More Loss-Tolerant RTP Payload Format for MP3 Audio; rfc3119.txt", A More Loss-Tolerant RTP Payload Format For MP3 Audio; RFC3119.TXT, Internet Engineering Task Force, IETF; Standard, Internet Society (ISOC) 4, Rue Des Falaises CH- 1205 Geneva, Switzerland, 1 June 2001, XP015008900. WO 2018/202205 A1 relates to using SDAP headers for handling of AS/NAS reflective QoS and to ensure in-sequence packet delivery during remapping in 5G communication systems. US 2017/078917 A1 relates to a protocol stack adaptation method and apparatus.

### BRIEF DESCRIPTION OF THE DRAWINGS

FIG. 1 illustrates a network environment in accordance with some embodiments.
FIG. 2 illustrates data bursts that may be transmitted between application layers to exchange application data in accordance with some embodiments.
FIG. 3 illustrates network traffic in accordance with some embodiments.
FIG. 4 illustrates transmission and reception of application data unit (ADU) packets in accordance with some embodiments.
FIG. 5 illustrates additional transmission and reception of ADU packets in accordance with some embodiments.
FIG. 6 illustrates additional transmission and reception of ADU packets in accordance with some embodiments.
FIG. 7 illustrates additional transmission and reception of ADU packets in accordance with some embodiments.
FIG. 8 illustrates an operational flow/algorithmic structure in accordance with some embodiments.
FIG. 9 illustrates another operational flow/algorithmic structure in accordance with some embodiments.
FIG. 10 illustrates a user equipment in accordance with some embodiments.
FIG. 11 illustrates a network node in accordance with some embodiments.

### DETAILED DESCRIPTION

The scope of protection for the invention is defined by the appended claims. The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B).

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

As briefly introduced above, one study area for developing 3GPP TSs is supporting low-latency communication and XR applications. Related key performance indicators (KPIs) and quality of service (QoS) aspects may specify radio access network (RAN) support for enhanced granularity for QoS, application data unit (ADU)-based QoS, and XR-specific QoS parameters. QoS flow handling and corresponding data radio bearer (DRB) control may also be specified.

There may be a number of potential areas of development with respect to application awareness in RAN operation. For example, it may be beneficial for a next-generation node B (gNB) to identify XR traffic characteristics and application layer attributes to be aware of QoS flow association, frame-level QoS, ADU-based QoS, and XR-specific QoS. Further, application layer information such as, for example, frame rate, delay, and packet importance, may aid XR-specific handling (for example, scheduling and radio bearer handling). Embodiments of the present disclosure describe aspects to facilitate network awareness of ADUs to enable enhanced QoS.

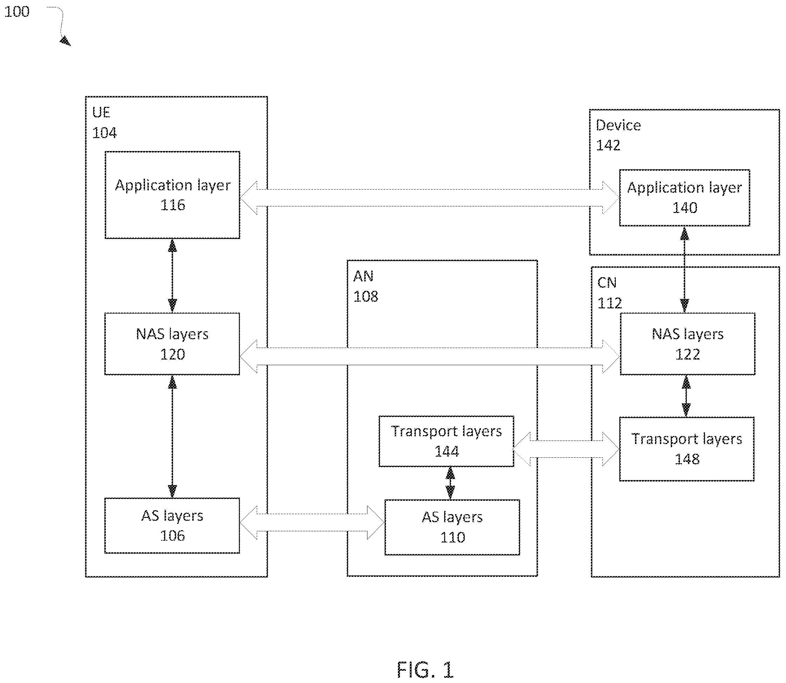

FIG. 1 illustrates a network environment 100 in accordance with some embodiments. The network environment 100 may include a UE 104 communicatively coupled with an access node (AN) 108. The UE 104 and the AN 108 may have access stratum (AS) layers 106 and 110, respectively, to communicate over air interfaces compatible with 3GPP TSs such as those that define Fifth Generation (5G) NR system standards. The AN 108 may be a gNB to provide one or more 5G New Radio (NR) cells that present NR user plane and control plane protocol terminations toward the UE 104.

Briefly, the AS layers 106 and 110 may include various layers organized in user plane protocol stack and control plane protocol stacks. The user plane protocol stack may include service data adaptation protocol (SDAP), packet data convergence protocol (PDCP), radio link control (RLC), media access control (MAC), and physical (PHY) layers. The control plane protocol stack may include radio resource control (RRC), PDCP, RLC, MAC, and PHY.

The network environment 100 may further include a core network (CN) 112, for example, a 5^{th} Generation Core network (5GC). The CN 112 may include non-access stratum (NAS) layers 122 communicatively coupled with NAS layers 120 in the UE 104.

The CN 112 may have a user plane function (UPF) that is responsible for routing and forwarding user-plane packets between the access node 108 and an external network. The UPF may handle the user plane path of protocol data unit (PDU) sessions. The UPF may be coupled with a session management function (SMF) that configures traffic steering, QoS control and policy related functions at the SMF, performs PDU session management, IP address allocation, general packet radio service tunneling protocol - user plane (GTP-U) tunnel management, selection and control of user plane functions, and downlink notification management. The CN 112 may also have an access and mobility management function (AMF) to handle connection and mobility management tasks.

The AN 108 may include transport layers 144 communicatively coupled with transport layers 148 in the CN 112. The transport layers 144/148 may handle various transport protocol functions over an N3 interface between the AN 108 and a UPF of the CN 112 or over an N9 interface between different UPFs. These functions may include rerouting, roaming, multi-homing, etc. that may be similar to descriptions in, for example, TS 23.501 v17.2.0 (2021-09-24), TS 38.414 v16.0.0 (2020-07-17), TS 38.415 v16.5.0 (2021-07-01), and TS 38.410 v16.4.0 (2021-10-01).

Various components of the network environment 100 may perform QoS mapping operations for transmissions between application layer 116 and an application layer 140 in device 142. The device 142 may a server, another UE, or another network node. Except as otherwise described herein, these QoS mapping operations may be similar to those described in the QoS model of clause 5.7 of 3GPP TS 23.501 v17.2.0 (2021-09).

Each QoS flow may be associated with a set of QoS characteristics such as, for example, resource type, packet delay budget (PDB), packet error rate (PER), priority level, and averaging window. The QoS characteristics are part of a QoS profile stored in the AN 108. The QoS profile may be referenced by a QoS identifier (for example, a 5G QoS identifier (SQI)).

Section 5.7 of 3GPP TS 23.501 v17.2.0 (2021-09-24) defines a set of standardized 5QIs and associated QoS characteristics. An extended range of operator-specific 5QIs may be configured as well. For non-guaranteed bit rate (GBR) QoS flows with standardized 5QI values, the 5QI values may be used as QFI and a default allocation/retention priority (ARP) may be assumed. No additional signaling over an N2 interface (between an AMF and the AN 108) may be required. For GBR and non-GBR QoS flows, all the necessary QoS parameters corresponding to a QFI may be sent as a QoS profile to the AN 108 as PDU session establishment or modification.

The QoS rules may be signaled from NAS layers 120 to NAS layers 122 using PDU session establishment/modification, preconfigured in the UE 104, or implicitly derived by applying reflective QoS. A QoS rule may include the QFI of the associated QoS flow, a packet filter set, and a precedence value. For a dynamically assigned QFI, the QoS rule may contain QoS parameters relevant to the UE 104 (for example, SQI, GBR, maximum bit rate (MBR), and the averaging window). Complete QoS characteristics may not be transferred over the air. The UE 104 may be provided with the QoS rules instead.

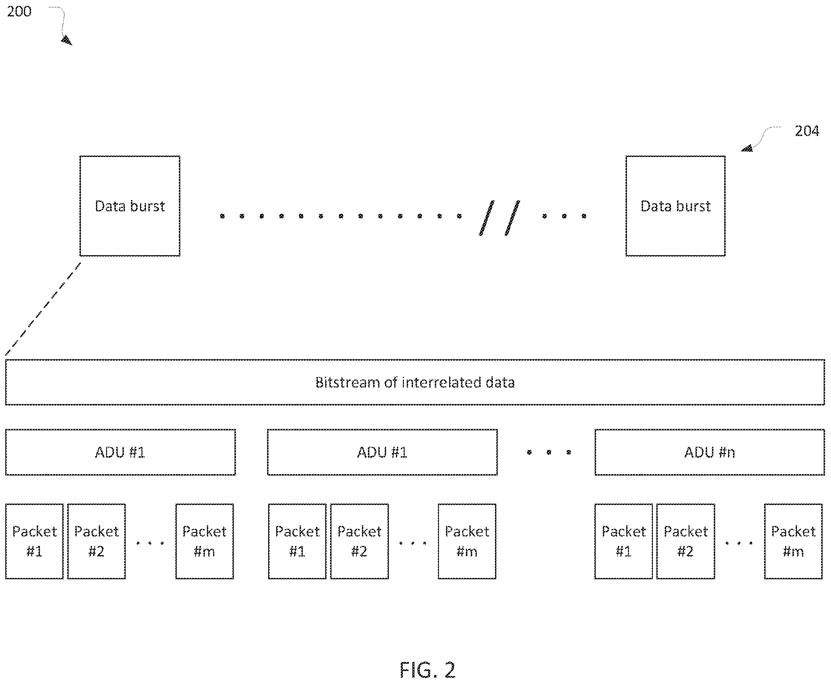

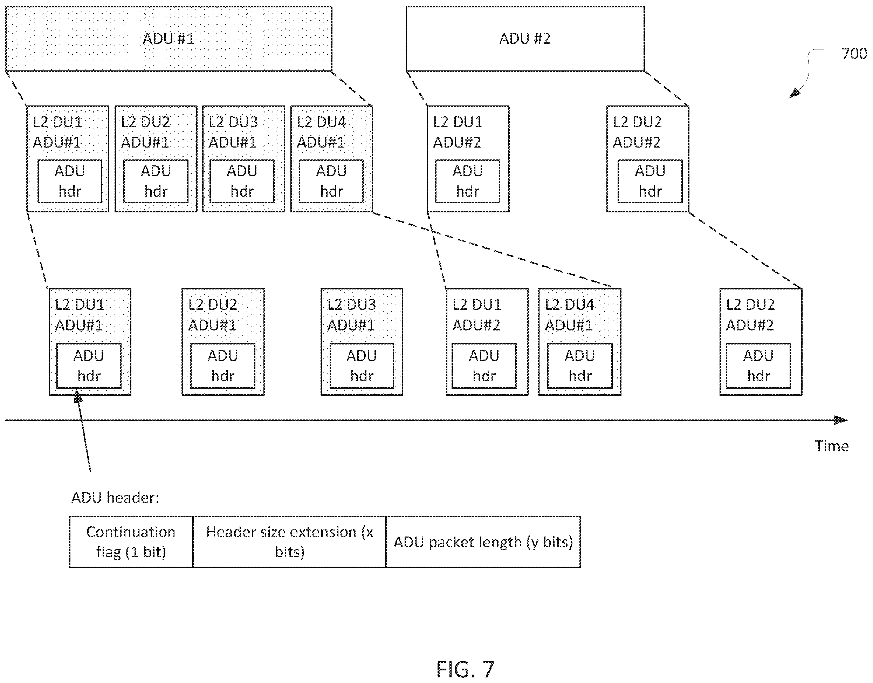

FIG. 2 illustrates data bursts 204 that may be transmitted between the application layers 116 and 140 to exchange application data in accordance with some embodiments. The data burst may be a bit stream of interrelated application data. The data may correspond to an application such as, for example, an XR application. The bitstream may be divided into a plurality of ADUs. The ADU may be considered the smallest data unit that can be independently processed by an application layer. One ADU may contain a plurality of lower-layer packets intended for over-the-air transmission. For example, one ADU may be packetized into a plurality of lower-layer packets. The lower-layer packets may also be referred to as ADU packets or data units (DUs) throughout the description. A DU may be a protocol data unit (PDU) or a service data unit (SDU). For example, one ADU may include a plurality of lower-layer packets. FIG. 7 shows each ADU having *m* packets, but different ADUs may have different numbers of packets.

An ADU may be specified for coding formats and RTP payload formats in a 3GPP file format (3GP) file. For audio and speech, an ADU may be specified as a coded frame intended for transport. For an audio codec, an ADU may be defined as an audio frame. For H.263 video compression standard, an ADU may include an entire RTP payload. For H.264 advanced video coding (AVC) standard or H.265 high-efficiency video coding (HEVC) standard, an ADU may be a network adaptation layer unit (NALU). For timed text, an ADU may include any of the type 1-5 RTP payload units. Further definitions and descriptions of ADUs may be found in 3GPP Technical Specification (TS) 26.234 v16.2.0 (2020-12-23), TS 26.244 v16.1.0 (2020-09-25), TS 26.346 v16.9.1 (2021-05-26), IETF RFC 6363 (October 2011), or IETF RFC 2736 (December 1999).

In some video compression standards (for example, H.264), an image may be divided into regions called slices. Each slice may include a set of macroblocks and may be reconstructed independently from other slices within the same picture. A frame may comprise one or more slices. A slice may be a segment of a frame that can be treated independently. H.264 may include three slice types: an intra-coded picture (I) slice, a predicted (P) slice, and a bidirectional predicted (B) slice. An I slice may be formed as an I frame, a P slice may be formed as a P frame, and a B slice may be formed as a B frame. Transmission of the I frames, which serve as a reference for the other frames, may be prioritized with respect to transmission of the P/B frames. The P/B frames may be transmitted with higher compression rates.

An ADU may include an entire frame or one or more slices in accordance with one or more the following options. In a first option, lower layers may treat slices as an ADU. However, an RTP packet, for example, may contain just a single slice mapped to a single UDP packet (as described in, for example, 3GPP TS 26.114 v17.2.0 (2021-09-24)). In this case, multiple slices may be considered to form an ADU. In a second option, lower layers may treat frames as an ADU. In a third option, an ADU may refer to a union of a single frame, a single slice, a plurality of slices, or special ADU type.

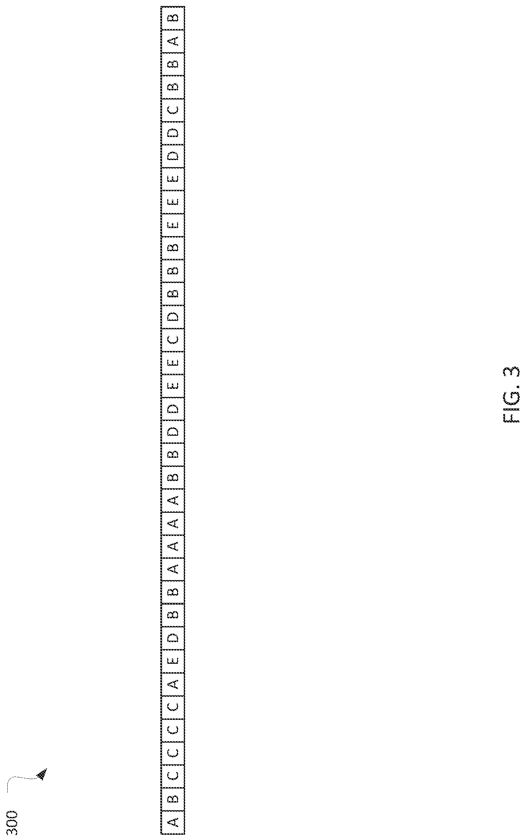

FIG. 3 illustrates network traffic 300 in accordance with some embodiments. The network traffic 300 may include packets that belong to five different ADUs. Packets marked "A" belong to a first ADU, packets marked "B" belong to a second ADU, etc. Typically once packets have come close to each other in a burst, they often stay together until they reach their common destination. With a bad connection or congestion at a network node, the outgoing queue may fill up. A burst may happen when a hop has free capacity and a node immediately sends all waiting packets. This may cause the network traffic 300 to appear "lumpy" with packets belonging to the same ADU having a higher chance of being adjacent to one another.

Embodiments impart awareness of ADUs at the RAN/CN level to improve routing and processing of data through the network. If a network node has knowledge of a packet belonging to a particular ADU it may forward or otherwise process that packet in an advantageous manner. For example, the network node may prioritize transmission of packets corresponding to some ADUs (e.g., I-frame ADUs) over others, or coordinate routing/forwarding/dropping of packets belonging to same ADUs. Knowledge of which RLC/PDCP/SDAP DUs carry the same ADU may also facilitate operation when DUs and packets are delivered out-of-sequence.

While embodiments describe awareness about which packets belong to which ADU, different packets may still be carried within a same QoS flow. Lower layers may then ensure these packets can be treated as a group.

Providing lower layers with ADU awareness may facilitate reliable and efficient transmission of the ADUs through the network. For example, an application of the receiver may require successful reception of all (or a large quantity of) DUs, otherwise the ADU may not be processed. If data cannot be delivered on time (for example, the packet delay budget is exceeded), transmission of subsequent data may be dropped.

Some aspects of the disclosure address ADU-based QoS objectives. For example, it may be desired to provide for QoS differentiation by enabling an ability to transmit ADUs with different QoS/protection. This might call for I frames/slices and P frames/slices to be treated with different reliability. It may further be desirable for a network node (for example, the UE 104, AN 108, a UPF, or an intermediate node) to identify that it has received all desired IP packets of an ADU even if lower layers spread the packets over multiple chunks of packets received delivered out-of-sequence. It may further be desirable for identification of all packets that form an ADU, identification of ADU borders (for example, start, stop, ADU length), or identification of ADU importance/severity.

Various embodiments describe providing ADU information in the headers of the DUs to facilitate processing out-of-sequence ADU packets, enable ADUs to be mapped to the lower-layer packets, and provide a parameter set that can describe an ADU along with any other desired parameters. While some embodiments focus on the RAN layers (and the Uu interface, in particular) aspects of the embodiments (e.g., header fields and ADU parameters) may be applied to network interfaces as well.

Providing the ADU information in the headers of the DUs may enable ADU packet aggregation and scheduling optimizations in light of lumpy/bursty characteristics associated with network traffic described above. With knowledge of which packets belong to which ADU, a scheduler may aggregate the packets and send them together. The scheduler may delay forwarding packets until a threshold number of packets (for example, all packets) of an ADU have been received from a previous hop. This may be especially beneficial for traffic going over the air interface. For example, not only can a scheduler of the AN 108 optimize the physical resources based on a type of the ADU, if a subset of the packets do not arrive within latency bounds, all packets of the ADU may be discarded early in the process. This may be achieved by utilizing an ADU burst start/end time or through assistance information provided to the AN 108 from the CN 112. This information may also influence both uplink and downlink scheduling by the AN 108.

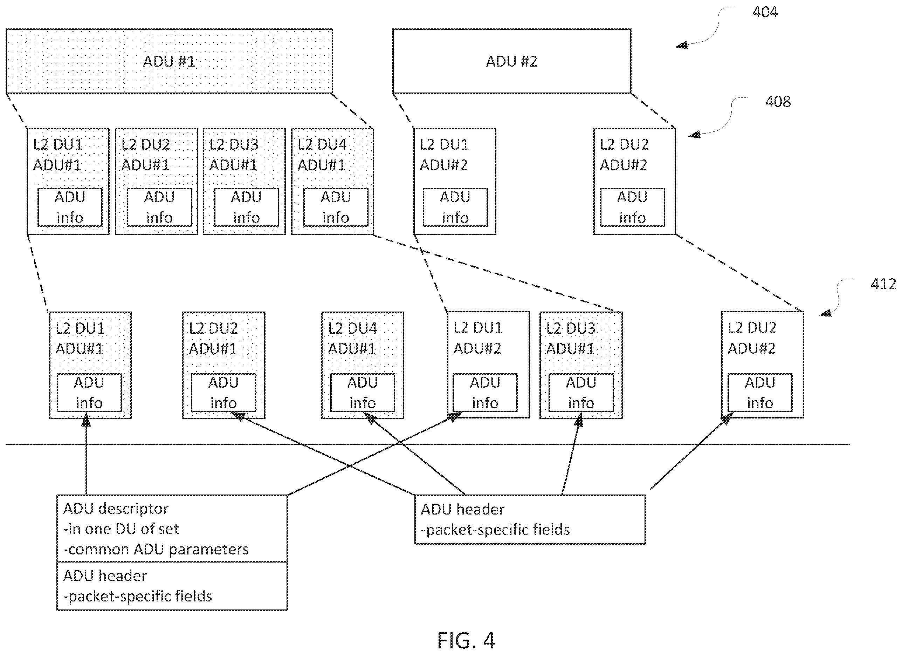

FIG. 4 illustrates transmission and reception of ADU packets in accordance with some embodiments. Two ADUs may be generated at an application layer at 404, ADU #1 and ADU #2. The ADUs may be packetized into lower layer packets (for example, layer 2 (L2) DUs) based on existing principles of data formatting and preparation at the transmitter.

An ADU convergence layer of the transmitter may also add ADU information (ADU info) to one or more of the L2 DUs. The ADU convergence layer may be integrated into an existing layer (SDAP, PDCP, RLC, MAC, GTP-U DUs, or the functions representing the PDU session user plane protocol, XN-U, F1-U, or E1-U interface) or implemented separately. The L2 DUs may include four DUs corresponding to ADU #1 and two DUs corresponding to ADU #2. The L2 DUs may correspond to SDAP, PDCP, RLC, MAC, GTP-U, PDU Session user plane protocol, Xn-U, F1-U, or E1-U DUs, or an ADU convergence protocol DU (if this layer is implemented separately).

The L2 DUs may be transmitted by lower layers of the transmitter at 408 and received by lower layers of the receiver at 412. As shown, the L2 DUs may be received at 412 in an order different than the order in which they were transmitted.

The ADU information added to the DUs as headers may be referred to as ADU descriptors or ADU headers. The ADU descriptor may be the larger header of the two. One packet in every ADU may carry the ADU descriptor, which may indicate ADU parameters that are common to all packets in the ADU. For example, the ADU parameters that may be included in the ADU descriptor may be parameters that describe the ADU such as an ADU type or importance. In some embodiments, the ADU descriptor may be included in only one packet of the ADU, for example, the first packet. As shown, ADU descriptors may be present in the ADU information of the L2 DU1 ADU #1 and L2 DU1 ADU #2.

The ADU information of each individual packet may also include an ADU header that includes packet-specific fields. For example, the ADU parameters that may be included in the ADU header may be parameters that describe a packet's position with respect to the set of packets that convey the ADU. The ADU parameters provided in the ADU descriptors and the ADU headers will be described in further detail below with respect to various embodiments.

Successful transmission of the packet carrying the ADU descriptor may be prioritized over transmission of other packets. If that packet is lost, the ADU may have to be dropped. However, in some embodiments, a loss of a certain amount of low-priority packets may occur without needing to drop the ADU. Thus, some embodiments provide features to reduce the chances that the packet carrying the ADU descriptor is lost. For example, the ADU descriptor may be placed in a packet of high importance and a receiver may buffer early packets until it has received the ADU descriptor. At that point, the receiver may start a full interpretation of the ADU. Additionally/alternatively, use of the ADU descriptor may be applied in acknowledged mode transmissions or other configurations/environments where packets have a low likelihood of being lost.

In some embodiments, instead of sending the ADU descriptor in a packet that carries a portion of the ADU, the UE 104 may provide the ADU descriptor to the AN 108 in AS scheduling assistance information. The AS scheduling assistance information may be transmitted over an L2 protocol. The AS scheduling assistance information may be transmitted by RRC (using, for example, UE assistance information), an SDAP control PDU, a PDCP control PDU, or a MAC CE. Transmitting the AS scheduling assistance information by RRC UE assistance information may be used for stable QoS flows where ADU parameters remain the same for an extended period of time. Transmitting the AS scheduling assistance information by MAC CE may allow for faster adjustments.

In some embodiments, the UE 104 may provide the ADU descriptor to the CN 112 through NAS signaling. The ADU descriptor may be signaled via a NAS message to an SMF using a modified existing NAS message or a new NAS message/parameter set. The ADU descriptor may be transmitted in NAS assistance information along with other scheduling assistance information that pertains to a QoS flow or PDU session.

The ADU descriptor provided by AS scheduling assistance information or a NAS message may include typical ADU parameter values associated with a QoS flow, DRB, or PDU session. The AN 108 or CN 112 may map/configure a suitable signaling option based on the ADU parameter values. Additionally/alternatively, the signaling options may be predefined by a 3GPP TS.

In some embodiments, in addition to providing the ADU descriptor by AS scheduling assistance information or a NAS message, one or more user data ADU packets may also contain the ADU descriptor. Since most ADU parameters may already be known to the AN 108 or CN 112 from AS/NAS signaling, the ADU parameters signaled in the ADU packets may be a delta set of parameters (for example, updates to the pre-signaled common set). An ADU descriptor received in a packet may be valid only for the current ADU or may be valid for the current ADU and subsequent ADUs.

In some embodiments, an ADU header may be included in every packet without transmitting an ADU descriptor. The ADU headers may convey at least a minimum set of ADU parameters that provide the most basic information such as ADU type and border of an ADU. Various options are described as follows.

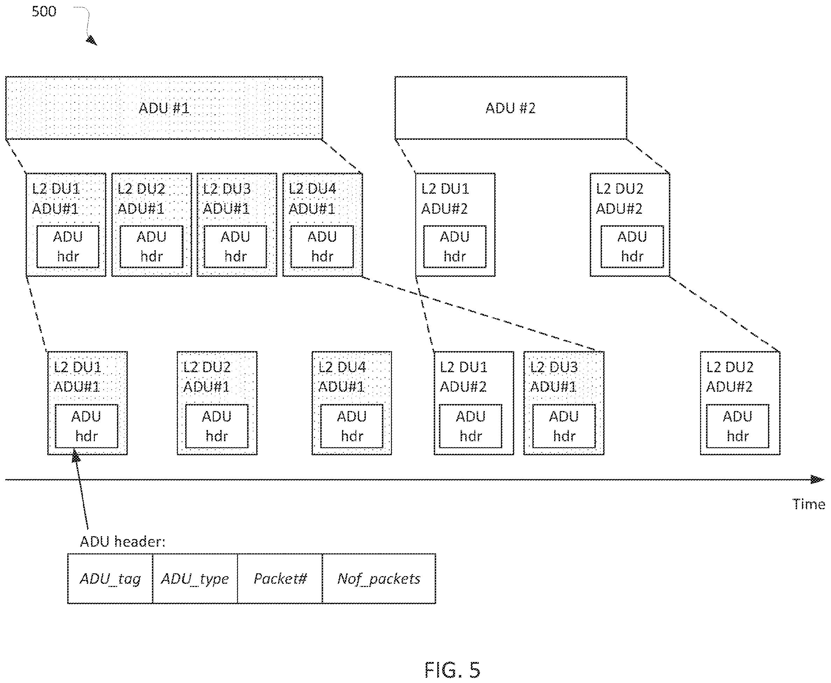

FIG. 5 illustrates transmission and reception of ADU packets in accordance with some embodiments. Two ADUs are generated and transmitted in a total of six DUs similar to that discussed above with respect to FIG. 4. In this embodiment, an ADU header having both common and packet-specific ADU parameters may be added to each DU. For example, the ADU header may include common ADU parameters such as an ADU tag, type, and number of packets; and may include a packet-specific parameter such as packet number.

An ADU tag (*ADU*_*tag*) may indicate an ADU tag number. The tag number may be an ID common to all packets of an ADU. The ADU tag may be used to identify packets that all belong to the same ADU or identify ADU borders. In some embodiments, the ADU tag may be considered a small range sequence number if desired. The ADU sequence numbering may be applicable to scenarios with interdependencies between ADUs.

An ADU type (*ADU_type*) may be used to identify the type (for example, frame type or slice type) or importance of an ADU. The ADU type field may include a number that can be mapped to a level of importance of the DU. The type field may be an indication of the desired level of protection (for example, reliability), prioritization, packet dropping, etc. In some embodiments, if the ADUs are mapped to different QoS flows, the ADU type may not be needed.

Typically, an ADU might be used as (or configured to contain) either a frame or slice. If a distinction between frames and slices is desired, the following options may be used.

In a first option, an additional parameter (*F*/*S*) may be added to the ADU header. The *F*/*S* parameter may be a one-bit parameter that indicates whether the current header is for a frame or slice.

In a second option, the ADU type field may have dedicated values for frames and slices. For example, 0 may correspond to a P-frame, 1 may correspond to an I-frame, 2 may correspond to a B frame, 3 may correspond to another frame, 4 may correspond to a P slice, 5 may correspond to an I slice, 6 may correspond to a B slice, 7 may correspond to a switching I (SI) slice, 8 may correspond to an switching P (SP) slice, 9 may correspond to an instantaneous decoding refresh (IDR) slice, 10 may correspond to an intra-random access picture (IRAP) slice, and 11 may correspond to another slice type. In other embodiments, other values may correspond to other frame or slice types.

In a third option, the type may indicate a priority or class value. This value may be mapped according to a higher layer or control configuration.

The number of packets (*Nof*_*packets*) field, which may also be referred to as an ADU window size (*ADU_window*_*size*), may be used to indicate a total number of DUs in the ADU. In the absence of an ADU descriptor, this field may be present in every ADU header. Otherwise, the presence of this field in the ADU descriptor may be sufficient.

A packet number (*packet*#) field may indicate a current ADU packet (DU) number, e.g., the *i*^{th} packet in the ADU. This field may not be needed if the sender/receiver relies on the PDCP/RLC sequence number (SNs) to count the packets in a window (for example, ADU_window_size).

Presence of the packet number and number of packets parameters may allow for a better estimation of when to drop subsequent packets. If an ADU is not able to be successfully received due to loss of over a predetermined number of packets, the remaining packets may be dropped. It may be desirable to drop the remaining packets as early as possible after determining a successful transmission will not occur.

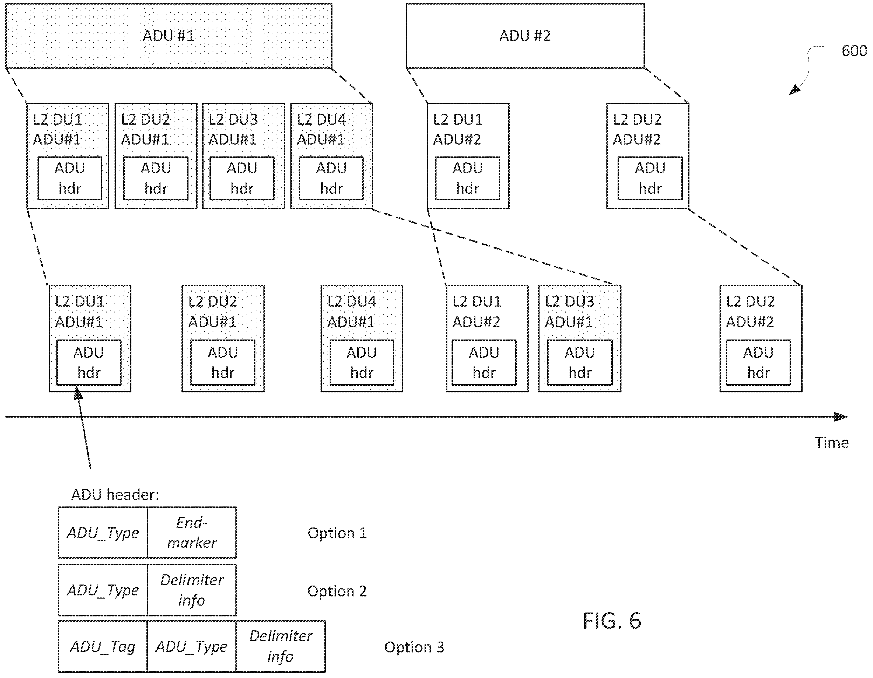

Providing an ADU header with a mix of both common and packet-specific ADU parameters may have slightly higher signaling overhead as compared to using both the ADU descriptor and ADU header as described above or compared to using the ADU header in FIG. 6 as described below. However, this embodiment may provide resilience against loss of a packet that includes the ADU descriptor. This embodiment may be used in unacknowledged mode in which packet delivery is less certain, acknowledged mode, or some other scenario.

FIG. 6 illustrates transmission and reception of ADU packets in accordance with some embodiments. Two ADUs are generated and transmitted in a total of six DUs similar to that discussed above with respect to FIG. 4. An ADU header, added to each DU, may include both common and packet-specific ADU parameters. FIG. 6 provides three options for providing ADU parameters in the ADU header.

In a first option, the ADU header may include an ADU type and an end marker. The end marker may be a one bit value to identify whether the DU is the last packet of an ADU. Use of the end marker may be based on the assumption that ADU packets are always packetized in sequence by the sender (upper layer). The receiver may delimit ADU by observing the end marker bit. This option may be most beneficial in scenarios where the last packet will not be lost.

In a second option, the ADU header may include an ADU type and delimiter information. The delimiter information may provide information of ADU boundaries. For example, the delimiter information may be a two-bit value that indicates whether the DU: includes all bytes of an ADU (00); is a first packet of the ADU (01); is a last packet of the ADU (10); or is neither the first nor last packet of the ADU (11). The two-bit values shown in parentheses are some examples. Other combinations may be used. This option may add more protection as compared to the first option as a receiver may still get a start marker or a neither-start-nor-end marker even if the end marker is lost and vice versa.

In a third option, the ADU header includes an ADU tag, ADU type, and delimiter information. Adding the tag may provide some redundancy that results in better reliability of the ADU synchronicity.

As compared to the third option, the second option may consume slightly more time for detecting lost ADU packets or for detecting when to drop the rest of an ADU if lost ADU packet numbers need to be retrieved from another layer. Also, an ADU may only be eligible for early dropping if a certain percentage out of all ADU packets are lost.

The three options of this embodiment may provide relatively small signaling overhead (for example, down to two bits). These options may be suitable for environments in which packet loss does not typically occur. For example, in transport network links in the core/access network or in the RAN when there are relatively stable radio conditions or good error protection. These options may mainly target acknowledged mode, but may be used with other modes as well.

With any of these three options, the out-of-sequence packets may be detected by evaluating existing PDCP/RLC SNs. This may imply that the sender (upper layer) submits ADU packets (DUs) to lower layers in sequence.

FIG. 7 illustrates transmission and reception of ADU packets in accordance with some embodiments. Two ADUs are generated and transmitted in a total of six DUs similar to that discussed above with respect to FIG. 4. An ADU header, added to each DU, may include both common and packet-specific ADU parameters. In particular, the ADU header may include a continuation flag, a header size extension, and an ADU packet length.

The ADU header may include a one-bit continuation flag. If the continuation flag is set to '1,' the data in the DU that includes the continuation flag is a continuation of an ADU that was too large to fit within one or more previous DUs, otherwise the continuation flag is set to '0.' For example, with respect to ADU #1, the continuation flag will be set to '0' in DU1 and to '1' in DU2, DU3, and DU4. The continuation flag may be combined with one or more other options or, for example, used instead of an end marker.

The header size extension flag may be used to indicate: a size of the ADU packet length field out of a number of configurable options (in accordance with other L2 layers); or a size of an overall ADU header in bytes. The header size extension flag may be *x-*bits, where x is an integer that depends on a maximum DU length that can be configured.

The ADU packet length may indicate a length of the ADU packet carrying the DU. The length, which may be in bytes, may be conveyed by *y* bits, where *y* is an integer.

The header size extension flag and the ADU packet length fields may be useful if the ADU function is located in, for example, SDAP, or a separate ADU convergence layer that does not have access to the existing DU length in other layers. If the ADU function has access to the existing DU length in other layers, these fields may not be needed.

Features of the present embodiment may be interchanged with features of other embodiments.

By providing the ADU information in the DUs as described above, the ADU convergence layer function creates awareness of the ADUs in the RAN or CN. This may enable a receiver to re-create the ADU structure or an intermediate node to efficiently forward the DUs that carry the ADU.

The ADU convergence layer may be configured with an ADU descriptor by receiving a data structure, an attention (AT) command, or an application programming interface (API) instruction. The configured ADU descriptor may include all necessary information to describe an ADU and may have parameters common to the whole ADU. The ADU descriptor may be related with an application for a given service or 5QI. Thus, the higher layers would have knowledge of the content and association of its parameters. The ADU descriptor may be provided to the ADU convergence layer in accordance with one of the following options.

In a first option, the upper layers may convey the ADU descriptor as a data structure to the ADU convergence layer. This may be a local conveyance.

In a second option, a standardized API may be defined (for example, via an AT command as described in 3GPP TS 27.007 v17.3.0 (2021-09-25)) to include all the necessary ADU parameters.

In a third option, the ADU convergence layer may receive the ADU descriptor from a network via RRC signaling or NAS signaling.

During the packetization process, the ADU convergence layer may derive packet-specific ADU parameters based on the configured ADU descriptor. The ADU convergence layer may then generate the ADU information, with the common or packet-specific ADU parameters as described elsewhere herein, which may be included in headers of the ADU packets.

The ADU descriptor that the ADU convergence layer signals along with transmission of the ADU (for example, through the header information of the DUs or AS/NAS signaling) may include some or all of the parameters of the configured ADU descriptor. The configured ADU descriptor may configure the ADU convergence layer for an operation mode. The configuration, as described above, may come from upper layers, via control plane signaling, pre-configuration, or manual configuration. Having the ADU convergence layer configured with one set of ADU information on one side of the communication does not imply that the entire set of ADU information needs to be conveyed to the other side of the communication. Once the ADU convergence layer is configured for operation, it may act as a sender or a receiver. For example, a sender may be configured with a ADU descriptor via one of the three options. The receiver may not necessarily know the ADU descriptor, thus the sender can convey some or all of it to a receiver via signaling. In another variant, all the "intelligence" may be in the network such that the network commonly configures the ADU descriptor for both sender and receiver. Or in yet another variant, both ends are configured locally and all the two end points need is to exchange ADU information for the actual user plane packets sent. In some examples, the ADU descriptor could be an ADU descriptor data structure (a common data structure used in the device or node); or a ADU descriptor message portion (a message part transmitted between as a primitive between layers or as a message between UE/nodes). Both options represent the same principal information.

In some embodiments, an ADU descriptor may be mapped to an identifier to facilitate conveyance of desired information to other nodes of a network. For example, one or more ADU parameters may be associated with an ADU flow identifier (AFI). The UE 104 or the network may signal all the parameters meant to describe an ADU via AS or NAS assistance information similar to that described above with respect to FIG. 4. In this manner, a plurality of parameter sets may be configured, with each parameter set being associated with a respective AFI. The ADU convergence layer may then include the AFI in the ADU header of the ADU packets. This may be done instead of including the ADU descriptor or even as the sole header. The AFI may additionally/alternatively be used to identify an ADU flow as desired (for example, in signaling messages). The AFI may act as a pointer to the ADU descriptor or the whole ADU parameter set, both in the UE 104 and in the network. In this manner, all the desired ADU parameters may be available to, and easily referenced by, appropriate nodes during a transmission.

This embodiment may be most advantageous when the ADU parameters are relatively stable. In some embodiments, the AFI may be associated with a stable set of ADU parameters while the more dynamic parameters are transmitted in the ADU headers.

In some embodiments, the ADU descriptor or the ADU parameter set may be preconfigured in the network and the UE 104 for a given AFI. The pre-configuration may be accomplished by defining various parameter sets and associated AFIs in a 3GPP TS.

In other embodiments, a parameter set (for example, the ADU descriptor or the whole ADU parameter set) may be associated with other identifiers. For example, the parameter set may be associated with a differentiated services (DiffServ) value or a flow label value instead of using an AFI. The parameter sets associated with such identifiers may be configured by AS/NAS as described above or predefined in a 3GPP TS.

In some embodiments, the ADU information may be linked to a QoS information such as, for example, a 5QI/QFI. A common ADU descriptor may be defined to match related traffic characteristics. The common ADU descriptor may be associated with a QoS profile and the QoS characteristics along with a 5QI/QFI. This may be accomplished by adding parameters of the ADU descriptor to the QoS profile (for example, QoS characteristics) that is associated with a 5QI/QFI. In this manner, the set of QoS parameters standardized by 3GPP TS 23.501 v17.2.0 (2021-09-24), section 5.7, could be extended to include ADU parameters.

In some embodiments, QoS profiles associated with operator-specific 5QIs/QFIs may be extended by providing additional ADU parameters through NAS signaling.

Linking ADU parameters to QoS information may be associated with the advantage of not having to signal ADU parameters (at least those associated with standardized or extended SQIs/QFIs). This may also provide the network with an opportunity to modify QoS rules or construct packet filters suitable to map to a QFI/AFI, respectively.

In some embodiments, the AFI may be linked with a QFI/5QI by defining the AFI as a subfield to a QFI. While this embodiment may be desirable in certain circumstances, extending the parameter set associated with a QFI may be a simpler way to implement the linking.

In some embodiments, a 5QI/QFI may be dynamically updated with ADU specific parameters through NAS signaling. In this embodiment, the UE 104 may utilize a base set of QoS characteristics associated with the 5QI/QFI and an additional set of ADU parameters may be added dynamically. Extending the 5QI/QFI characteristics to include the ADU parameters may be an optional feature that is used as needed.

Aspects of linking the ADU information to QoS information may be used in conjunction with other aspects described herein.

The configured ADU descriptor may be a parameter set that includes one or more of the following ADU parameters. An ADU descriptor of a particular embodiment may only include some of the parameters listed.

An overall ADU length (*ADU_length*) that indicates an overall number of bytes in the ADU.

An ADU window size (*ADU_window*_*size*) that indicates a number of packets contained in the ADU. The ADU window size may also be referred to as a number of packets (*Nof*_*packets*) in some instances. The ADU window defines the packets that are associated with an ADU and can be used to reassemble a complete ADU before delivering it to upper sublayers (unless reassembly is kept in the upper layers). For example, with respect to FIG. 4, the ADU window size may be equal to four ADU packets for ADU #1 and two ADU packets for ADU #2. The ADU window size may be used by the ADU convergence layer for performing ADU lower layer packet assembly (at a transmitter) and ADU reassembly (at a receiver, towards upper layers) or delivery of a set of separate smaller ADU packets (at a receiver) to upper layers at once (when the reassembly function resides in application layer). The ADU convergence layer may also rely on the ADU window for packet delivery to upper layers, early dropping, and setting of ADU headers.

In some instances, the ADU convergence layer may deliver ADU packets to upper sublayers early (for example, before the ADU window closes) if desired for performance reasons. Also, if packet dropping is configured, the ADU convergence layer may drop the sending or receiving of packets once a threshold number of packets have been processed or based on events such as a failure.

An ADU threshold *(ADU threshold)* (or packet drop preference) that indicates a minimum number of packets needed to decode or process the ADU or a minimum percentage of bytes in the ADU needed to decode or process the ADU. If the ADU requires that all ADU packets are successfully received and ordered for the whole ADU to be usable, this parameter would equal the value of *ADU_window*_*size* or *Nof_packets* or be set to 100%. If a node determines that fewer packets than the *ADU_threshold* has been received, the ADU convergence layer may not deliver the ADU to upper sublayers or onto the next top. Alternatively, the ADU convergence layer may have already delivered some packets, but may drop sending or receiving remaining ones. If a node (e.g., the UE 104, AN 108, or UPF) has received a subset of ADU packets for an ADU, the scheduler may also use the ADU_threshold parameter to optimize the allocation of resources or the scheduling of packets in its queues. The scheduler may drop packets early (if packets are aggregated at the node) or drop packets arriving late (if other packets have already been sent), or decide when to stop triggering retransmissions, etc.

An ADU tag (*ADU*_*tag*) that indicates an ADU tag number. The tag number may be an ID common to all packets of an ADU. The ADU tag may be used to identify packets that all belong to the same ADU or identify ADU borders. In some embodiments, the ADU tag may be considered a small range sequence number if desired. The ADU sequence numbering may be applicable to scenarios with interdependencies between ADUs.

An ADU type (*ADU_type*) that provides information about an importance or class of the ADU as a whole. The ADU type may be similar to that described above with respect to the ADU type included in the ADU header. The ADU type field may indicate a frame type, slice type, or a slice sequence as a subfield. The ADU type may provide important information that can be used to select traffic routes and inform scheduling related decisions like packet prioritization or reliability settings (for example, when to map traffic to a configuration with a high reliability). The AN 108 may use the ADU type to map transmission parameters (for example, DRB, QoS flow, configured grant configuration, PHY configuration, or logical channel prioritization (LCP)) to appropriate higher or lower reliability/priority.

Different services may use an ADU container in different ways and may set subfields of the ADU type based on higher layer information. For example, if packets in an ADU belong to an I frame, then the subfield may be set to 'frame.' However, if the frame is segmented into different slice types (like IPPP), the subfield may be set to 'slice sequence.' Whether the notion of ADUs is based on frames or slices should be handled consistently throughout the network, which is also part of traffic detection in the UPF and the UE 104. However, a differentiation between frames and slices may not always be essential to lower sublayers. Some embodiments may keep this information in higher layers as well.

A slice type (*Slice*_*type*) that is similar to the ADU type but for slices only.

A frame type (*Frame*_*type*) that is similar to the ADU type but for frames only.

An ADU slice group (*ADU*_*slice*_*group*) that provides a slice group ID. All packets belonging to the same slice in an ADU may carry the same slice group ID. The ADU slice group may be combined with an indication of the slice type. For example, slice group 1 may indicate I slices, slice group 2 may indicate P slices, etc. Real-time transport control protocol (RTCP) or other control packets (for example, transmission control protocol (TCP) acknowledgments) may be mapped to an ADU or slice group as well.

An ADU slice sequence (*ADU_slice*_*sequence*) that advertises how many slices (each identified by its own ADU slice group) are contained in the ADU, what is their slice type, and in which order they occur in the ADU. The ADU slice sequence may be an I slice, P slice, P slice, P slice (IPPP), for example. The ADU slice sequence may be used to map RTCP packets (or other control information) to an ADU and to give the packets higher priority within the ADU. It may be assumed that one slice fits into one ADU packet (DU) as currently specified for multimedia telephony services or IP multimedia services (MTSI) in 3GPP TS 26.114. If a slice spans multiple ADU packets, an ADU type may be used instead of the ADU slice sequence or an additional substructure may be inserted.

In some embodiments, the ADU descriptor may include additional parameters to specify different QoS requirements for the ADU. Some examples may be as follows. An ADU latency class (ADU_delay_budget) to define an upper limit that the ADU packets may be delayed. An ADU reliability class (*ADU_error_rate*) to indicate transmission requirements (in terms of probability of loss, duplication, mis-sequencing, or corruption of DUs) required by an application. ADU priority level (*ADU_priority*) to provide an enumerated priority level for transmitting the ADU. In general, the lower priority level may be associated with a higher priority. An ADU packet size to provide a size of an ADU packet. An ADU transmission rate (distribution) parameter to describe a statistical distribution of an expected transmission/arrival rate of ADUs or packets contained in an ADU (for example, Pareto, truncated Gaussian, or completely random, etc.). An ADU periodicity to define a time period between start of two bursts. ADU burst timing to provide a latest possible time when a first packet of the data burst arrives at either an ingress interface of the RAN (in the downlink flow direction) or an egress interface of the UE 104 (in an uplink flow direction). An ADU direction (for example, uplink or downlink). A survival time to provide a time period in application may survive without any burst.

In some embodiments, at least a subset of the ADU parameters of the ADU descriptor described herein may be used in transport layer functions over an N3/N9 interface.

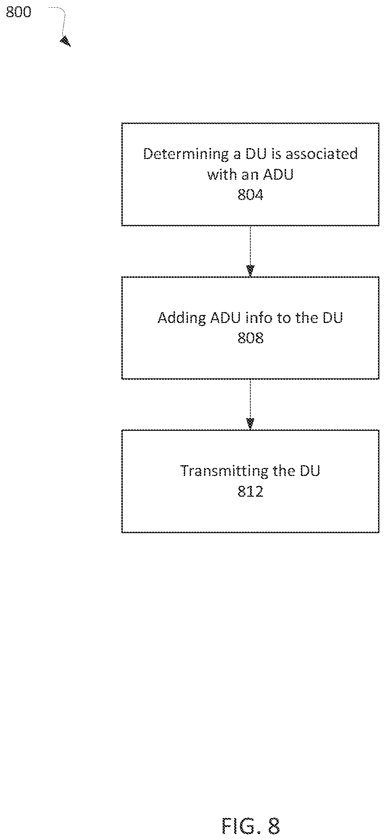

FIG. 8 illustrates an operation flow/algorithmic structure 800 in accordance with some embodiments. The operation flow/algorithmic structure 800 may be performed by an ADU convergence layer of a node such as, for example, UE 104 or 1000, device 142, a network node 1100, or components thereof, for example, processing circuitry 1004 or 1104.

The operation flow/algorithmic structure 800 may include, at 804, determining an DU is associated with an ADU. The DU may include some or all of the data of the ADU. In some embodiments, a plurality of DUs may be used to convey the data of one ADU.

The operation flow/algorithmic structure 800 may further include, at 808, adding ADU information to the DU. The ADU information may indicate one or more parameters associated with the ADU. The parameters may be descriptive of the ADU itself and, therefore, common to all the DUs that carry the data of the ADU. Additionally/alternatively, the parameters may be specific to the DU. For example, the parameters may describe the DU's role in carrying its portion of the data of the ADU.

In some embodiments, the common parameters may be referred to as an ADU descriptor that is transmitted in a subset (for example, one) DU of the DUs that carry data of the ADU, while the packet-specific parameters are referred to as ADU headers added to each packet. In some embodiments, an ADU header may include a combination of common and packet-specific parameters. Some or all of the common parameters may also be signaled, by AS or NAS signaling, separately from the DUs themselves.

In some embodiments, the ADU information added to the DU (or signaled along with transmission of the DU) may be based on an ADU descriptor with which the ADU convergence layer is configured. The ADU convergence layer may be configured with the ADU descriptor by a higher layer of a device that implements the ADU convergence layer, or by a network node.

The operation flow/algorithmic structure 800 may further include, at 812, transmitting the DU.

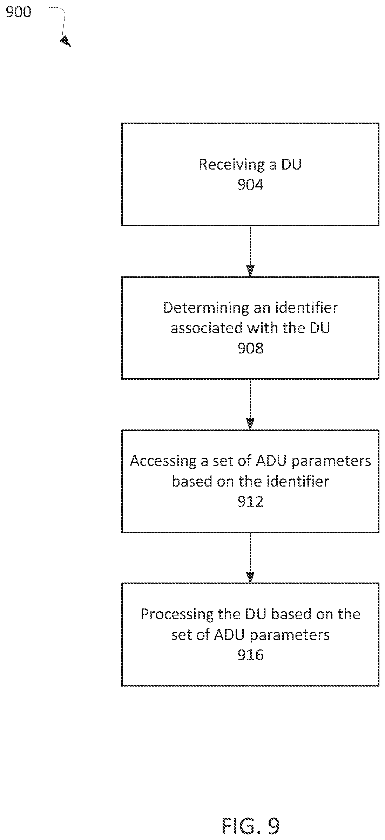

FIG. 9 illustrates an operation flow/algorithmic structure 900 in accordance with some embodiments. The operation flow/algorithmic structure 900 may be performed by a device such as, for example, the UE 104, the AN 108, device 142, UE 1000, network node 1100, or components thereof, for example, processing circuitry 1104 or 1204.

The operation flow/algorithmic structure 900 may include, at 904, receiving an DU. The DU may be an L2 DU that includes some or all of the data of an ADU.

The operation flow/algorithmic structure 900 may further include, at 908, determining an identifier associated with the DU. The identifier may be an AFI, a QoS indicator (for example, 5QI/QFI), a DiffServ value, or a flow label value.

The operation flow/algorithmic structure 900 may further include, at 912, accessing a set of ADU parameters based on the identifier. In some embodiments, the device implement in the operation flow/algorithmic structure 900 may be configured with an association between the parameter set and the identifier. This configuration may be stored in memory and accessed upon receipt of the identifier. In some embodiments, the identifier is a QoS indicator and the association between the parameter set and the identifier is stored within a QoS profile as defined by a standard or updated by network signaling.

The operation flow/algorithmic structure 900 may further include, at 916, processing the DU based on the set of ADU parameters. In some embodiments, the processing of the DU may be performed by lower layers of a receiver. In these embodiments, the lower layers may determine whether a sufficient number of the DUs of the ADU have been successfully received in time and, if so, provide the DUs to higher layers for further processing. If a sufficient number of the DUs are not successfully received in time, the processing of the DU may include dropping the DU.

In some embodiments, the processing of the DU may be performed by an intermediate node in a network. In these embodiments, the processing may include determining whether one or more DUs of the ADU are received within a predetermined period of time and coordinating transmission of the group of the DUs. In these embodiments, the processing may additionally/alternatively include forwarding the DU using resources consistent with signaling characteristics (for example, importance, latency constraints, or priority levels) of the ADU or DU. In some embodiments, if it is determined the successful transmission of an ADU is no longer possible (given, for example, delay or loss of other DUs), processing of the DU may include dropping the DU.

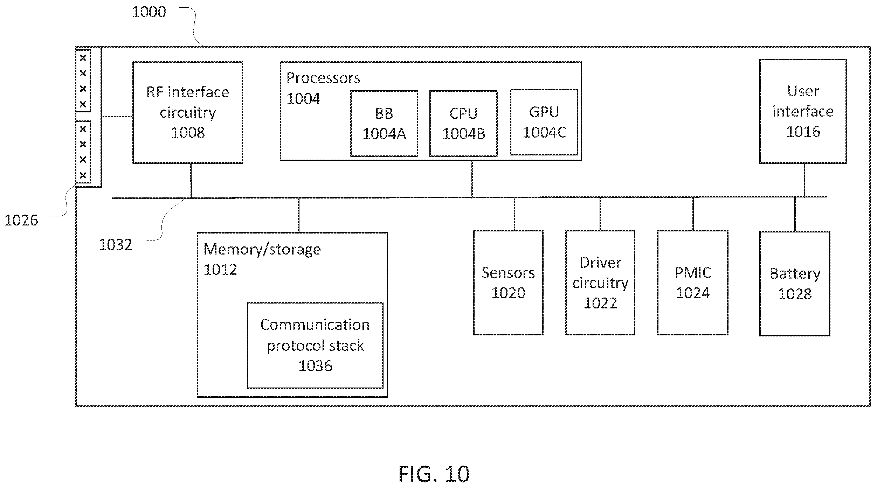

FIG. 10 illustrates a UE 1000 in accordance with some embodiments. The UE 1000 may be similar to and substantially interchangeable with UE 104 or device 142 of FIG. 1.

The UE 1000 may be any mobile or non-mobile computing device, such as, for example, mobile phones, computers, tablets, XR devices, glasses, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 1000 may include processors 1004, RF interface circuitry 1008, memory/storage 1012, user interface 1016, sensors 1020, driver circuitry 1022, power management integrated circuit (PMIC) 1024, antenna structure 1026, and battery 1028. The components of the UE 1000 may be implemented as integrated circuits (ICs), portions thereof, discrete electronic devices, or other modules, logic, hardware, software, firmware, or a combination thereof. The block diagram of FIG. 10 is intended to show a high-level view of some of the components of the UE 1000. However, some of the components shown may be omitted, additional components may be present, and different arrangement of the components shown may occur in other implementations.

The components of the UE 1000 may be coupled with various other components over one or more interconnects 1032, which may represent any type of interface, input/output, bus (local, system, or expansion), transmission line, trace, or optical connection that allows various circuit components (on common or different chips or chipsets) to interact with one another.

The processors 1004 may include processor circuitry such as, for example, baseband processor circuitry (BB) 1004A, central processor unit circuitry (CPU) 1004B, and graphics processor unit circuitry (GPU) 1004C. The processors 1004 may include any type of circuitry or processor circuitry that executes or otherwise operates computer-executable instructions, such as program code, software modules, or functional processes from memory/storage 1012 to cause the UE 1000 to perform operations as described herein.

In some embodiments, the baseband processor circuitry 1004A may access a communication protocol stack 1036 in the memory/storage 1012 to communicate over a 3GPP compatible network. In general, the baseband processor circuitry 1004A may access the communication protocol stack 1036 to: perform user plane functions at a PHY layer, MAC layer, RLC sublayer, PDCP sublayer, SDAP sublayer, and upper layer; and perform control plane functions at a PHY layer, MAC layer, RLC sublayer, PDCP sublayer, RRC layer, and a NAS layer. In some embodiments, the PHY layer operations may additionally/alternatively be performed by the components of the RF interface circuitry 1008.

The baseband processor circuitry 1004A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 1012 may include one or more non-transitory, computer-readable media that includes instructions (for example, communication protocol stack 1036) that may be executed by one or more of the processors 1004 to cause the UE 1000 to perform various operations described herein. The memory/storage 1012 include any type of volatile or non-volatile memory that may be distributed throughout the UE 1000. In some embodiments, some of the memory/storage 1012 may be located on the processors 1004 themselves (for example, L1 and L2 cache), while other memory/storage 1012 is external to the processors 1004 but accessible thereto via a memory interface. The memory/storage 1012 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1008 may include transceiver circuitry and radio frequency front module (RFEM) that allows the UE 1000 to communicate with other devices over a radio access network. The RF interface circuitry 1008 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna structure 1026 and proceed to filter and amplify (with a low-noise amplifier) the signal. The signal may be provided to a receiver of the transceiver that down-converts the RF signal into a baseband signal that is provided to the baseband processor of the processors 1004.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1026.

In various embodiments, the RF interface circuitry 1008 may be configured to transmit/receive signals in a manner compatible with NR access technologies.

The antenna 1026 may include antenna elements to convert electrical signals into radio waves to travel through the air and to convert received radio waves into electrical signals. The antenna elements may be arranged into one or more antenna panels. The antenna 1026 may have antenna panels that are omnidirectional, directional, or a combination thereof to enable beamforming and multiple input, multiple output communications. The antenna 1026 may include microstrip antennas, printed antennas fabricated on the surface of one or more printed circuit boards, patch antennas, or phased array antennas. The antenna 1026 may have one or more panels designed for specific frequency bands including bands in FR1 or FR2.

The user interface circuitry 1016 includes various input/output (I/O) devices designed to enable user interaction with the UE 1000. The user interface 1016 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1000.

The sensors 1020 may include devices, modules, or subsystems whose purpose is to detect events or changes in its environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1022 may include software and hardware elements that operate to control particular devices that are embedded in the UE 1000, attached to the UE 1000, or otherwise communicatively coupled with the UE 1000. The driver circuitry 1022 may include individual drivers allowing other components to interact with or control various input/output (I/O) devices that may be present within, or connected to, the UE 1000. For example, driver circuitry 1022 may include a display driver to control and allow access to a display device, a touchscreen driver to control and allow access to a touchscreen interface, sensor drivers to obtain sensor readings of sensor circuitry 1020 and control and allow access to sensor circuitry 1020, drivers to obtain actuator positions of electro-mechanic components or control and allow access to the electro-mechanic components, a camera driver to control and allow access to an embedded image capture device, audio drivers to control and allow access to one or more audio devices.

The PMIC 1024 may manage power provided to various components of the UE 1000. In particular, with respect to the processors 1004, the PMIC 1024 may control power-source selection, voltage scaling, battery charging, or DC-to-DC conversion.

In some embodiments, the PMIC 1024 may control, or otherwise be part of, various power saving mechanisms of the UE 1000 including DRX as discussed herein.

A battery 1028 may power the UE 1000, although in some examples the UE 1000 may be mounted deployed in a fixed location, and may have a power supply coupled to an electrical grid. The battery 1028 may be a lithium ion battery, a metal-air battery, such as a zinc-air battery, an aluminum-air battery, a lithium-air battery, and the like. In some implementations, such as in vehicle-based applications, the battery 1028 may be a typical lead-acid automotive battery.

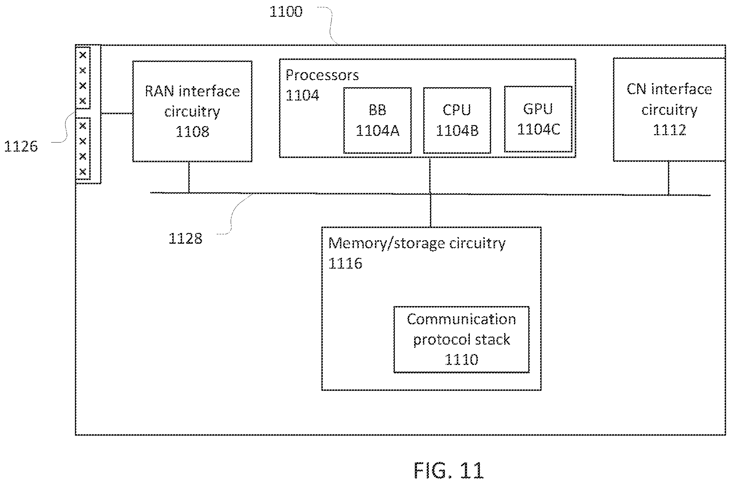

FIG. 11 illustrates a network node 1100 in accordance with some embodiments. The network node 1100 may be similar to and substantially interchangeable with access node 108, device 142, or a node of the CN 112 of FIG. 1.

The network node 1100 may include processors 1104, RF interface circuitry 1108 (if implemented as an access node), core network (CN) interface circuitry 1112, memory/storage circuitry 1116, and antenna structure 1126 (if implemented as an access node).

The components of the network node 1100 may be coupled with various other components over one or more interconnects 1128.

The processors 1104, RF interface circuitry 1108, memory/storage circuitry 1116 (including communication protocol stack 1110), antenna structure 1126, and interconnects 1128 may be similar to like-named elements shown and described with respect to FIG. 10. If the network node 1100 is implemented as an access node, the communication protocol stack 1110 may include access stratum layers. If the network node 1100 is implemented as a device in a core network, for example, as a UPF or SMF, the communication protocol stack 1110 may include a NAS layer.

The CN interface circuitry 1112 may provide connectivity to a core network, for example, a 5^{th} Generation Core network (5GC) using a SGC-compatible network interface protocol such as carrier Ethernet protocols, or some other suitable protocol. Network connectivity may be provided to/from the network node 1100 via a fiber optic or wireless backhaul. The CN interface circuitry 1112 may include one or more dedicated processors or FPGAs to communicate using one or more of the aforementioned protocols. In some implementations, the CN interface circuitry 1112 may include multiple controllers to provide connectivity to other networks using the same or different protocols.

In some embodiments, the network node 1100 may be coupled with transmit receive points (TRPs) using the antenna structure 1126, CN interface circuitry, or other interface circuitry.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications provided those variations and modifications remain within the scope of the claims.

## Claims

1. One or more computer-readable media having instructions that, when executed by processing circuitry to be implemented in a network node, cause the processing circuitry to:
determine (804) a first data unit, DU, is associated with an application data unit, ADU, wherein a plurality of DUs are associated with the ADU;
add (808), to the first DU, ADU information in a general packet radio service tunneling protocol - user plane, GTP-U, header, the ADU information to indicate one or more parameters associated with the ADU including a level of importance of the ADU; and
provide the first DU for transmission.

2. The one or more computer-readable media of claim 1, wherein the ADU information comprises an ADU descriptor and the instructions, when executed, further cause the processing circuitry to:
generate the ADU descriptor to indicate the one or more parameters, which are common to the plurality of DUs; and
add the ADU descriptor solely to the first DU of the plurality of DUs.

3. The one or more computer-readable media of claim 1, wherein the one or more parameters includes an ADU parameter specific to the first DU, and the instructions, when executed, further cause the processing circuitry to:
provide an ADU descriptor that includes at least one ADU parameter common to the plurality of DUs.

4. The one or more computer-readable media of claim 1, wherein the ADU information includes a tag number to identify the ADU in a sequence of ADUs, a type value to identify a type or level of importance of the ADU, a packet number to indicate a position of the first DU in a sequence of the plurality of DUs of the ADU, or an ADU size to indicate a total number of DUs of the ADU.

5. The one or more computer-readable media of claim 1, wherein the ADU information includes an end marker to indicate the first DU is a last packet of the ADU; a two-bit delimiter value to indicate that the first DU includes all bytes of the ADU, is a first packet of the ADU, is a last packet of the ADU, or is neither a first packet nor a last packet of the ADU; or a tag number to identify the ADU in a sequence of ADUs.

6. The one or more computer-readable media of claim 1, wherein the ADU information includes: a continuation flag to indicate data of the first DU is to be combined with data from one or more DUs of the ADU that precede the first DU in a sequence; a header size extension to indicate a size of an ADU packet length field of the ADU header or a size of the ADU header; or an ADU packet length field to indicate a length of the first DU.

7. A method (900) comprising:
receiving (904) a first data unit, DU, that includes data of an application data unit, ADU, wherein a plurality of DUs are associated with the ADU;
determining (908) ADU information associated with the DU, wherein the ADU information is in a general packet radio service tunneling protocol - user plane, GTP-U, header of the DU and includes a level of importance of the ADU; and
processing (916) the first DU based on the ADU information.

8. The method of claim 7, wherein the ADU information further includes a tag number to identify the ADU in a sequence of ADUs, a type value to identify a type of the ADU, a packet number to indicate a position of the first DU in a sequence of the plurality of DUs of the ADU, or an ADU size to indicate a total number of DUs of the ADU.

9. An apparatus (1100) comprising processing circuitry (1104) configured to:
receive information to configure an application data unit, ADU, descriptor corresponding to an ADU of a data burst;
generate, based on the ADU descriptor, ADU information;
add the ADU information to a general packet radio service tunneling protocol - user plane, GTP-U, header of a data unit, DU, that has data of the ADU, wherein a plurality of DUs are associated with the ADU, and wherein the ADU information includes a level of importance of the ADU; and
provide, for transmission, the first DU with the GTP-U header.

10. The apparatus of claim 9, wherein the ADU descriptor includes an ADU type to indicate a frame type, a slice type, or a slice sequence of the ADU.

11. The apparatus of claim 9 or 10, wherein the ADU descriptor includes a slice group identifier, a latency class, a reliability class, a priority level, a maximum packet size, or transmission rate for DUs of the ADU.

12. The apparatus of any of claims 9-11, wherein the ADU descriptor includes a periodicity to define a time period between a start of two data bursts, a burst timing to provide a latest possible arrival time of a first packet of the data burst, or a survival time to provide a time period in which an application may survive without receiving any data burst.

## Patentansprüche

1. Ein oder mehrere computerlesbare Medien, die Anweisungen aufweisen, die, wenn sie durch eine Verarbeitungsschaltung ausgeführt werden, die in einem Netzknoten umzusetzen ist, die Verarbeitungsschaltung zu Folgendem veranlassen:
Bestimmen (804), dass eine erste Dateneinheit, DU, einer Anwendungsdateneinheit, ADU, zugeordnet ist, wobei eine Vielzahl von DUs der ADU zugeordnet ist;
Hinzufügen (808), zu der ersten DU, von ADU-Informationen in einem General-Packet-Radio-Service-Tunneling-Protocol-Benutzerebenen-Header, GTP-U-Header, wobei die ADU-Informationen einen oder mehrere Parameter anzugeben haben, die der ADU zugeordnet sind, beinhaltend ein Wichtigkeitsniveau der ADU; und
Bereitstellen der ersten DU zur Übertragung.

2. Ein oder mehrere computerlesbare Medien nach Anspruch 1, wobei die ADU-Informationen einen ADU-Deskriptor umfassen und die Anweisungen, wenn sie ausgeführt werden, die Verarbeitungsschaltung ferner zu Folgendem veranlassen:
Erzeugen des ADU-Deskriptors, um den einen oder die mehreren Parameter anzugeben, die der Vielzahl von DUs gemeinsam sind; und
lediglich Hinzufügen des ADU-Deskriptors zu der ersten DU der Vielzahl von DUs.

3. Ein oder mehrere computerlesbare Medien nach Anspruch 1, wobei der eine oder die mehreren Parameter einen ADU-Parameter beinhalten, der spezifisch für die erste DU ist, und die Anweisungen, wenn sie ausgeführt werden, die Verarbeitungsschaltung ferner zu Folgendem veranlassen:
Bereitstellen eines ADU-Deskriptors, der mindestens einen ADU-Parameter beinhaltet, welcher der Vielzahl von DUs gemeinsam ist.

4. Ein oder mehrere computerlesbare Medien nach Anspruch 1, wobei die ADU-Informationen eine Tag-Zahl, um die ADU in einer Sequenz von ADUs zu identifizieren, einen Artwert, um eine Art oder ein Wichtigkeitsniveau der ADU zu identifizieren, eine Paketzahl, um eine Position der ersten DU in einer Sequenz der Vielzahl von DUs der ADU anzugeben, oder eine ADU-Größe, um eine Gesamtzahl an DUs der ADU anzugeben, beinhalten.

5. Ein oder mehrere computerlesbare Medien nach Anspruch 1, wobei die ADU-Informationen eine Endmarkierung, um anzugeben, dass die erste DU ein letztes Paket der ADU ist; einen Zwei-Bit-Begrenzungswert, um anzugeben, dass die erste DU alle Bytes der ADU beinhaltet, ein erstes Paket der ADU ist, ein letztes Paket der ADU ist oder weder ein erstes Paket noch ein letztes Paket der ADU ist; oder eine Tag-Zahl, um die ADU in einer Sequenz von ADUs zu identifizieren, beinhalten.

6. Ein oder mehrere computerlesbare Medien nach Anspruch 1, wobei die ADU-Informationen Folgendes beinhalten: ein Kontinuations-Flag, um anzugeben, dass Daten der ersten DU mit Daten von einer oder mehreren DUs der ADU zu kombinieren sind, die der ersten DU in einer Sequenz vorausgehen; eine Header-Größenerweiterung, um eine Größe eines ADU-Paketlängenfelds des ADU-Headers oder eine Größe des ADU-Headers anzugeben; oder ein ADU-Paketlängenfeld, um eine Länge der ersten DU anzugeben.

7. Verfahren (900), umfassend:
Empfangen (904) einer ersten Dateneinheit, DU, die Daten einer Anwendungsdateneinheit, ADU, beinhaltet, wobei eine Vielzahl von DUs der ADU zugeordnet ist;
Bestimmen (908) von ADU-Informationen, die der DU zugeordnet sind, wobei sich die ADU-Informationen in einem General-Packet-Radio-Service-Tunneling-Protocol-Benutzerebenen-Header, GTP-U-Header, der DU befinden und ein Wichtigkeitsniveau der ADU beinhalten; und
Verarbeiten (916) der ersten DU basierend auf den ADU-Informationen.

8. Verfahren nach Anspruch 7, wobei die ADU-Informationen ferner eine Tag-Zahl, um die ADU in einer Sequenz von ADUs zu identifizieren, einen Artwert, um eine Art der ADU zu identifizieren, eine Paketzahl, um eine Position der ersten DU in einer Sequenz der Vielzahl von DUs der ADU anzugeben, oder eine ADU-Größe, um eine Gesamtzahl an DUs der ADU anzugeben, beinhalten.

9. Vorrichtung (1100), umfassend eine Verarbeitungsschaltung (1104), die zu Folgendem konfiguriert ist:
Empfangen von Informationen, um einen Anwendungsdateneinheitsdeskriptor, ADU-Deskriptor, zu konfigurieren, der einer ADU eines Daten-Bursts entspricht;
Erzeugen, basierend auf dem ADU-Deskriptor, von ADU-Informationen;
Hinzufügen der ADU-Informationen zu einem General-Packet-Radio-Service-Tunneling-Protocol-Benutzerebenen-Header, GTP-U-Header, einer Dateneinheit, DU, die Daten der ADU aufweist, wobei eine Vielzahl von DUs der ADU zugeordnet ist und wobei die ADU-Informationen ein Wichtigkeitsniveau der ADU beinhalten; und
Bereitstellen, zur Übertragung, der ersten DU mit dem GTP-U-Header.

10. Vorrichtung nach Anspruch 9, wobei der ADU-Deskriptor eine ADU-Art beinhaltet, um eine Rahmenart, eine Slice-Art oder eine Slice-Sequenz der ADU anzugeben.

11. Vorrichtung nach Anspruch 9 oder 10, wobei der ADU-Deskriptor eine Slice-Gruppenkennung, eine Latenzklasse, eine Zuverlässigkeitsklasse, ein Prioritätsniveau, eine maximale Paketgröße oder eine Übertragungsrate für DUs der ADU beinhaltet.

12. Vorrichtung nach einem der Ansprüche 9-11, wobei der ADU-Deskriptor eine Periodizität, um einen Zeitraum zwischen einem Anfang zweier Daten-Bursts zu definieren, eine Burst-Zeitplanung, um eine spätestmögliche Ankunftszeit eines ersten Pakets des Daten-Bursts bereitzustellen, oder eine Überlebenszeit, um einen Zeitraum bereitzustellen, in dem eine Anwendung ohne Empfangen eines beliebigen Daten-Bursts überleben kann, beinhaltet.

## Revendications

1. Support ou plusieurs supports lisibles par ordinateur ayant des instructions qui, lorsqu'elles sont exécutées par une circuiterie de traitement devant être mise en œuvre dans un nœud de réseau, amènent la circuiterie de traitement à :
déterminer (804) qu'une première unité de données, DU, est associée à une unité de données d'application, ADU, dans lequel une pluralité de DU sont associées à l'ADU ;
ajouter (808), à la première DU, des informations d'ADU dans un en-tête de protocole de tunnellisation de service général de radiocommunication en mode paquet - plan usager, GTP-U, les informations d'ADU étant destinées à indiquer un ou plusieurs paramètres associés à l'ADU incluant un niveau d'importance de l'ADU ; et
fournir la première DU pour transmission.

2. Support ou plusieurs supports lisibles par ordinateur selon la revendication 1, dans lequel les informations d'ADU comprennent un descripteur d'ADU et les instructions, lorsqu'elles sont exécutées, amènent en outre la circuiterie de traitement à :
générer le descripteur d'ADU pour indiquer l'un ou plusieurs paramètres, qui sont communs à la pluralité de DU ; et
ajouter le descripteur d'ADU uniquement à la première DU de la pluralité de DU.

3. Support ou plusieurs supports lisibles par ordinateur selon la revendication 1, dans lequel l'un ou plusieurs paramètres incluent un paramètre d'ADU spécifique à la première DU, et les instructions, lorsqu'elles sont exécutées, amènent en outre la circuiterie de traitement à :
fournir un descripteur d'ADU qui inclut au moins un paramètre d'ADU commun à la pluralité de DU.

4. Support ou plusieurs supports lisibles par ordinateur selon la revendication 1, dans lequel les informations d'ADU incluent un numéro de balise pour identifier l'ADU dans une séquence d'ADU, une valeur de type pour identifier un type ou un niveau d'importance de l'ADU, un numéro de paquet pour indiquer une position de la première DU dans une séquence de la pluralité de DU de l'ADU, ou une taille d'ADU pour indiquer un nombre total de DU de l'ADU.

5. Support ou plusieurs supports lisibles par ordinateur selon la revendication 1, dans lequel les informations d'ADU incluent un marqueur de fin pour indiquer que la première DU est un dernier paquet de l'ADU ; une valeur de délimiteur de deux bits pour indiquer que la première DU inclut tous les octets de l'ADU, est un premier paquet de l'ADU, est un dernier paquet de l'ADU, ou n'est ni un premier paquet ni un dernier paquet de l'ADU ; ou un numéro de balise pour identifier l'ADU dans une séquence d'ADU.

6. Support ou plusieurs supports lisibles par ordinateur selon la revendication 1, dans lequel les informations d'ADU incluent : un indicateur de continuation pour indiquer que des données de la première DU doivent être combinées avec des données provenant d'une ou plusieurs DU de l'ADU qui précèdent la première DU dans une séquence ; une extension de taille d'en-tête pour indiquer une taille d'un champ de longueur de paquet d'ADU de l'en-tête d'ADU ou une taille de l'en-tête d'ADU ; ou un champ de longueur de paquet d'ADU pour indiquer une longueur de la première DU.

7. Procédé (900) comprenant :
la réception (904) d'une première unité de données, DU, qui inclut des données d'une unité de données d'application, ADU, dans lequel une pluralité de DU sont associées à l'ADU ;
la détermination (908) d'informations d'ADU associées à la DU, dans lequel les informations d'ADU sont dans un en-tête de protocole de tunnellisation de service général de radiocommunication en mode paquet - plan usager, GTP-U, de la DU et incluent un niveau d'importance de l'ADU ; et
le traitement (916) de la première DU sur la base des informations d'ADU.

8. Procédé selon la revendication 7, dans lequel les informations d'ADU incluent en outre un numéro de balise pour identifier l'ADU dans une séquence d'ADU, une valeur de type pour identifier un type de l'ADU, un numéro de paquet pour indiquer une position de la première DU dans une séquence de la pluralité de DU de l'ADU, ou une taille d'ADU pour indiquer un nombre total de DU de l'ADU.

9. Appareil (1100) comprenant une circuiterie de traitement (1104) configurée pour :
recevoir des informations pour configurer un descripteur d'unité de données d'application, ADU, correspondant à une ADU d'une salve de données ;
générer, sur la base du descripteur d'ADU, des informations d'ADU ;
ajouter les informations d'ADU à un en-tête de protocole de tunnellisation de service général de radiocommunication en mode paquet - plan usager, GTP-U, d'une unité de données, DU, qui a des données de l'ADU, dans lequel une pluralité de DU sont associées à l'ADU, et dans lequel les informations d'ADU incluent un niveau d'importance de l'ADU ; et
fournir, pour transmission, la première DU avec l'en-tête GTP-U.

10. Appareil selon la revendication 9, dans lequel le descripteur d'ADU inclut un type d'ADU pour indiquer un type de trame, un type de tranche, ou une séquence de tranches de l'ADU.

11. Appareil selon la revendication 9 ou 10, dans lequel le descripteur d'ADU inclut un identifiant de groupe de tranches, une classe de latence, une classe de fiabilité, un niveau de priorité, une taille de paquet maximale, ou un taux de transmission pour des DU de l'ADU.

12. Appareil selon l'une quelconque des revendications 9 à 11, dans lequel le descripteur d'ADU inclut une périodicité pour définir une période de temps entre un début de deux salves de données, une synchronisation de salve pour fournir une dernière heure d'arrivée possible d'un premier paquet de la salve de données, ou un temps de survie pour fournir une période de temps pendant laquelle une application peut survivre sans recevoir aucune salve de données.
